# EUROPÄISCHE PATENTSCHRIFT

(11) **EP 1 522 547 B1**
(45) Veröffentlichungstag und Bekanntmachung des Hinweises auf die Patenterteilung: **30.09.2009**
(21) Anmeldenummer: 04103923.1
(22) Anmeldetag: 16.08.2004
(51) Int. Cl.: C08G 18/18, C08G 18/79

(54) **Hochreaktive, flüssige uretdiongruppenhaltige Polyurethansysteme, die bei niedriger Temperatur härtbar sind**
Highly reactive liquid uretdione groups-containing polyurethane systems which are curable at low temperature
Systèmes de polyuréthane liquides, fortement réactifs et réticulables à basse temperature, contenant des groupes urétidinedione

(30) Priorität: 09.10.2003 DE 10346957
(43) Veröffentlichungstag der Anmeldung: 13.04.2005
(73) Patentinhaber: Evonik Degussa GmbH, 45128 Essen (DE)
(72) Erfinder: Spyrou, Emmanouil, Dr., 46282, Dorsten (DE)

(56) Entgegenhaltungen:
- EP-A- 1 334 987
- DE-A- 3 739 549
- DE-A- 19 728 855

## Beschreibung

Die Erfindung betrifft hochreaktive, flüssige uretdiongruppenhaltige Polyurethanzusammensetzungen, die bei niedrigen Einbrenntemperaturen aushärten, ein Verfahren zur Herstellung sowie deren Verwendung zur Herstellung von Kunststoffen, insbesondere Lackbeschichtungen und Klebstoffen.

Extern oder intern blockierte Polyisocyanate stellen wertvolle Vernetzer für thermisch vernetzbare Polyurethan (PUR)-Lack- und Klebstoffzusammensetzung dar.

So beschreibt z. B. die DE-OS 27 35 497 PUR-Lacke mit hervorragender Witterungsund Wärmestabilität. Die Vernetzer, deren Herstellung in der DE-OS 27 12 931 beschrieben wird, bestehen aus mit ε-Caprolactam blockiertem, Isocyanuratgruppen enthaltendem Isophorondiisocyanat. Es sind auch urethan-, biuret- oder harnstoffgruppenhaltige Polyisocyanate bekannt, deren Isocyanatgruppen ebenfalls blockiert sind.

Der Nachteil dieser extern blockierten Systeme besteht in der Abspaltung des Blockierungsmittels während der thermischen Vernetzungsreaktion. Da das Blockierungsmittel somit in die Umwelt emittieren kann, müssen aus ökologischen und arbeitshygienischen Gründen besondere Vorkehrungen zur Reinigung der Abluft und Wiedergewinnung des Blockierungsmittels getroffen werden. Zudem weisen die Vernetzer eine geringe Reaktivität auf. Es sind Härtungstemperaturen oberhalb von 170 °C erforderlich.

Die DE-OS 30 30 539 und DE-OS 30 30 572 beschreiben Verfahren zur Herstellung von uretdiongruppenhaltigen Polyadditionsverbindungen, deren terminale Isocyanatgruppen mit Monoalkoholen oder Monoaminen irreversibel blockiert sind. Nachteilig sind insbesondere die Ketten abbrechenden Bestandteile der Vernetzer, die zu geringen Netzwerkdichten der PUR-Lackbeschichtungen und damit zu mäßigen Lösemittelbeständigkeiten führen.

Hydroxylgruppenterminierte, uretdiongruppenhaltige Polyadditionsverbindungen sind Gegenstand der EP 0 669 353. Sie weisen aufgrund ihrer Funktionalität von zwei eine verbesserte Resistenz gegenüber Lösemitteln auf. Den Zusammensetzungen auf Basis dieser uretdiongruppenhaltigen Polyisocyanate ist gemeinsam, dass sie bei der Härtungsreaktion keine flüchtigen Verbindungen emittieren. Allerdings liegen die Einbrenntemperaturen mit mindestens 180 °C auf hohem Niveau.

Der Einsatz von Amidinen als Katalysatoren in PUR-Lackzusammensetzung wird in der EP 0 803 524 beschrieben. Diese Katalysatoren führen zwar zu einer Erniedrigung der Aushärtungstemperatur, zeigen aber eine beträchtliche Vergilbung, die im Beschichtungsbereich allgemein unerwünscht ist. Ursache dieser Vergilbung sind vermutlich die reaktiven Stickstoffatome in den Amidinen. Diese können sich mit Luftsauerstoff zu N-Oxiden umsetzen, die für die Verfärbung verantwortlich sind.

In der EP 0 803 524 werden auch andere Katalysatoren erwähnt, die bislang für diesen Zweck verwendet wurden, ohne aber eine besondere Wirkung auf die Aushärtetemperatur zu zeigen. Dazu gehören die aus der Polyurethan-Chemie bekannten metallorganischen Katalysatoren, wie z. B. Dibutylzinndilaurat (DBTL), oder aber tertiäre Amine, wie z. B. 1,4-Diazabicylco[2.2.2]octan (DABCO).

Die EP 1 334 987 offenbart eine Polyurethan-Pulverlackzusammensetzung, im Wesentlichen enthaltend einen uretdiongruppenhaltigen Pulverlackhärter mit einem Schmelzpunkt von 40 bis 130 °C, einem freien NCO-Gehalt von kleiner 5 Gew.-% und einem Uretdiongehalt von 6-18 Gew.-%, und ein hydroxylgruppenhaltiges Polymer mit einem Schmelzpunkt von 40 bis 130 °C und Ammoniumhydroxide und Ammoniumfluoride als Katalysator. Diese Polyurethan-Pulverlackzusammensetzung ist bei Raumtemperatur fest.

Aufgabe der vorliegenden Erfindung war es daher, flüssige hochreaktive uretdiongruppenhaltige Polyurethanzusammensetzungen zu finden, die sich bereits bei sehr niedrigen Temperaturen aushärten lassen und sich insbesondere zur Herstellung von Kunststoffen sowie von hochglänzenden oder matten, licht- und wetterstabilen hochreaktiven Beschichtungen, insbesondere für Lack- und Klebstoffzusammensetzungen, eignen.

Überraschend wurde gefunden, dass bestimmte Katalysatoren die Rückspaltung von Uretdiongruppen so stark beschleunigen, so dass sich bei Verwendung uretdionhaltiger Härter die Aushärtetemperatur von Polyurethanzusammensetzungen beträchtlich erniedrigen lässt.

Herkömmliche uretdionhaltige Lack- bzw. Klebstoffzusammensetzungen lassen sich unter normalen Bedingungen (DBTL-Katalyse) erst ab 180 °C aushärten. Mit Hilfe der erfindungsgemäßen Niedrigtemperatur härtenden Lack- bzw. Klebstoffzusammensetzungen kann bei 100 bis 160 °C Aushärtungstemperatur nicht nur Energie und Aushärtungszeit gespart werden, sondern es lassen sich auch viele temperatursensible Substrate beschichten bzw. verkleben, die bei 180 °C unerwünschte Vergilbungs-, Zersetzungs- und/oder Versprödungserscheinungen zeigen würden. Neben Metall, Glas, Holz, Leder, Kunststoffen und MDF-Platten sind auch bestimmte Aluminiumuntergründe prädestiniert. Bei letzteren führt eine zu hohe Temperaturbelastung mitunter zu einer unerwünschten Änderung der Kristallstruktur.

Gegenstand der vorliegenden Erfindung sind hochreaktive, flüssige uretdiongruppenhaltige Polyurethanzusammensetzungen, mit einem Schmelzpunkt unterhalb von 40 °C, (d. h. flüssig bei Raumtemperatur oder kurz oberhalb von RT), im Wesentlichen enthaltend
A) mindestens einen uretdiongruppenhaltigen Härter, basierend auf aliphatischen, (cyclo)aliphatischen und/oder cycloaliphatischen Polyisocyanaten und hydroxylgruppenhaltigen Verbindungen mit einem freien NCO-Gehalt von kleiner 5 Gew.-% und einem Uretdiongehalt von 1 bis 18 Gew.-%
   und
B) mindestens einen Katalysator aus der Gruppe der Katalysatoren
   1. der Formel [NR¹R²R³R⁴]⁺ [R⁵COO]⁻, wobei R¹ bis R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ bis R⁴ verbrückt, unter Ausbildung von Cyclen, Bicyclen oder Tricyclen und die Verbrückungsatome neben Kohlenstoff auch Heteroatome sein können, mit 1 bis 18 Kohlenstoffatomen bedeuten und jeder Rest R¹ bis R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann und R⁵ ein Alkyl-, Aryl-, Aralkyl-, Heteroaryl-, Alkoxyalkylrest, linear oder verzweigt, mit 1 bis 18 Kohlenstoffatomen darstellt und zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen kann,
   2. der Formel [NR¹R²R³R⁴]⁺ [R⁵]⁻, wobei R¹ bis R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ bis R⁴ verbrückt, unter Ausbildung von Cyclen, Bicyclen oder Tricyclen und die Verbrückungsatome neben Kohlenstoff auch Heteroatome sein können, mit 1 bis 18 Kohlenstoffatomen darstellen und jeder Rest R¹ bis R⁴ zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen kann und R⁵ entweder OH oder F bedeutet,
   3. der Formel M(OR¹)ₙ(OR²)ₘ(OR³)ₒ(OR⁴)ₚ(OR⁵)_{q}(OR⁶)ᵣ, wobei M ein Metall in beliebiger positiver Oxidationsstufe und identisch mit der Summe n+m+o+p+q+r ist, m, o, p, q, r ganze Zahlen von 0 bis 6 darstellen und für die Summe n+m+o+p+q+r = 1 bis 6 gilt, die Reste R¹ bis R⁶ gleichzeitig oder unabhängig voneinander Wasserstoff oder Alkyl-, Aryl-, Aralkyl-, Heteroaryl-, Alkoxyalkylreste mit 1 bis 8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen können,
   wobei diese Katalysatoren aus den Gruppen 1 bis 3 einzeln oder in Mischungen mit einer inerten Hülle umgeben und damit verkapselt sein können;
C) gegebenenfalls ein hydroxylgruppenhaltiges oder amingruppenhaltiges Polymer mit einer OH-Zahl zwischen 20 und 500 mg KOH/Gramm bzw. einem vergleichbaren Amingehalt;
D) gegebenenfalls mindestens eine gegenüber Säuregruppen reaktive Verbindung mit einem Gewichtsanteil, bezogen auf die Gesamtformulierung, von 0,1 bis 10%;
E) gegebenenfalls mindestens eine Säure in monomerer oder polymerer Form in einem Gewichtsanteil, bezogen auf die Gesamtformulierung, von 0,1 bis 10 %;
F) gegebenenfalls Lösemittel;
G) gegebenenfalls Hilfs- und Zusatzstoffe;
   so dass der Anteil des Katalysators unter B) 0,001 bis 5 Gew.-% an der Gesamtmenge der Komponenten beträgt und die beiden Komponenten A) und sofern vorhanden C) in einem beliedigen Verhältnis vorliegen können.

Gegenstand der Erfindung ist auch ein Verfahren zur Herstellung von Polyurethanzusammensetzungen in beheizbaren Aggregaten bei Temperaturen unterhalb von 130 °C.

Gegenstand der Erfindung ist auch die Verwendung der erfindungsgemäßen Polyurethanzusammensetzungen zur Herstellung von Lacken und Klebstoffen und auch Beschichtungen auf Metall-, Kunststoff-, Glas-, Holz-, oder Ledersubstraten oder sonstigen hitzeresistenten Untergründen.

Gegenstand der Erfindung ist auch die Verwendung der erfindungsgemäßen Polyurethanzusammensetzungen zur Herstellung von Verklebungen von Metall-, Kunststoff-, Glas-, Holz-, oder Ledersubstraten oder sonstigen hitzeresistenten Untergründen.

Ebenfalls Gegenstand der Erfindung sind Metallbeschichtungszusammensetzungen, insbesondere für Automobilkarossen, Motor- und Fahrräder, Gebäudeteile und Haushaltsgeräte, Holzbeschichtungszusammensetzungen, Glasbeschichtungszusammensetzungen, Lederbeschichtungszusammensetzungen und Kunststoffbeschichtungszusammensetzungen.

Uretdiongruppen enthaltende Polyisocyanate als Ausgangsverbindungen für die Komponente A) sind wohlbekannt und werden beispielsweise in US 4 476 054, US 4 912 210, US 4 929 724 sowie EP 0 417 603 beschrieben. Ein umfassender Überblick über industriell relevante Verfahren zur Dimerisierung von Isocyanaten zu Uretdionen liefert das J. Prakt. Chem. 336 (1994) 185-200. Im Allgemeinen erfolgt die Umsetzung von Isocyanaten zu Uretdionen in Gegenwart löslicher Dimerisierungskatalysatoren, wie z. B. Dialkylaminopyrldlnen, Trialkylphosphinen, Phosphorigsäure-triamiden oder Imdidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird Im Anschluss durch Kurzwegverdampfung abgetrennt. Ist der Katalysator flüchtig genug, kann das Reaktionsgamisch im Zuge der Monomerabtrennung vom Katalysator befreit werden.
Auf den Zusatz von Katalysatorgiften kann in diesem Fall verzichtet werden. Grundsätzlich ist zur Herstellung von Uretdiongruppen enthaltenden Polyisocyanaten eine breite Palette von isocyanaten geeignet. Erfindungsgemäß werden lsophamndiisocyanm (IPDI), Hexamethylendiisocyanat (HDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI), bevorzugt verwendet. Ganz besonders bevorzugt werden IPDI und HDI.

Die Umsetzung dieser uretdiongruppentragenden Polyisocyanate zu Uretdiongruppen aufweisenden Härtern A) beinhaltet die Reaktion der freien NCO-Gruppen mit hydmxylgruppenhaltigen Monomeren oder Polymeren, wie z. B. Polyestern, Polythioethern, Polyethern, Polycaprolactamen, Polyepoxiden, Polyesteramiden, Polyurethanen oder niedermolekularen Di-, Tri- und/oder Tetraalkoholen als Kettenverlängerer und gegebenenfalls Monoaminen und/oder Monoalkoholen als Kettenabbrecher und wurde schon häufig beschrieben (EP 0 669 353, EP 0 669 354, DE 30 30 572, EP 0 639 598 oder EP 0 803 524). Bevorzugte Uretdiongruppen aufweisende Härter A) haben einen freien NCO-Gehalt von weniger als 5 Gew.-% und einen Gehalt an Uretdiongruppen von 1 bis 18 Gew.-% (berechnet als C₂N₂O₂, Molekulargewicht 84). Bevorzugt werden Polyester und monomere Dialkohole. Außer den Uretdiongruppen können die Härter A) auch Isocyanurat-, Biuret-, Allophanat-, Urethan- und/oder Harnstoff-Strukturen aufweise.

Die erfindungswesentlichen Katalysatoren B) genügen
1. der Formel [NR¹R²R³R⁴]⁺ [R⁵COO]⁻, wobei R¹ bis R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ bis R⁴ verbrückt, unter Ausbildung von Cyclen, Bicyclen oder Tricyclen und die Verbrückungsatome neben Kohlenstoff auch Heteroatome sein können, mit 1 bis 18 Kohlenstoffatomen bedeuten und jeder Rest R¹ bis R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann und R⁵ ein Alkyl-, Aryl-, Aralkyl-, Heteroaryl-, Alkoxyalkylrest, linear oder verzweigt, mit 1 bis 18 Kohlenstoffatomen darstellt und zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen kann, oder
2. der Formel [NR¹R²R³R⁴]⁺ [R ⁵]⁻, wobei R¹ bis R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ bis R⁴ verbrückt, unter Ausbildung von Cyclen, Bicyclen oder Tricyclen und die Verbrückungsatome neben Kohlenstoff auch Heteroatome sein können, mit 1 bis 18 Kohlenstoffatomen darstellen und jeder Rest R¹ bis R⁴ zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen kann und R⁵ entweder OH oder F bedeutet, oder
3. der Formel M(OR¹)ₙ(OR²)ₘ(OR³)ₒ(OR⁴)ₚ(OR⁵)_{q}(OR⁶)ᵣ, wobei M ein Metall in beliebiger positiver Oxidationsstufe und identisch mit der Summe n+m+o+p+q+r ist, m, o, p, q, r ganze Zahlen von 0 bis 6 darstellen und für die Summe n+m+o+p+q+r = 1 bis 6 gilt, die Reste R¹ bis R⁶ gleichzeitig oder unabhängig voneinander Wasserstoff oder Alkyl-, Aryl-, Aralkyl-, Heteroaryl-, Alkoxyalkylreste mit 1 bis 8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen können.

Beispiele für solche Katalysatoren unter 1. sind Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat Tetrabutylammoniumformiat, Tetrabutylammoniumacetat, Tetrabutylammoniumpropionat, Tetrabutylammoniumbutyrat und Tetrabutylammoniumbenzoat.

Beispiele für solche Katalysatoren unter 2. sind Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Tetramethylammoniumfluorid, Tetraethylammoniumfluorid, Tetrabutylammoniumfluorid, Tetraoctylammoniumfluorid und Benzyltrimethylammoniumfluorid.

Beispiele für solche Katalysatoren unter 3. sind Lithiumhydroxid, Natriumhydroxid, Kaliumhydroxid, Rubidiumhydroxid, Cäsiumhydroxid, Berilliumiumhydroxid, Magnesiumhydroxid, Calziumhydroxid, Strontiumhydroxid, Bariumhydroxid, Aluminiumhydroxid, Zinkhydroxid, Lithiummethanolat, Natriummethanolat, Kaliummethanolat, Magnesiummethanolat, Calciummethanolat, Bariummethanolat, Lithiumethanolat, Natriumethanolat, Kaliumethanolat, Magnesiumethanolat, Calciumethanolat, Bariumethanolat, Lithiumpropylalkoholat, Natriumpropylalkoholat, Kaliumpropylalkoholat, Magnesiumpropylalkoholat, Calziumpropylalkoholat, Bariumpropylalkoholat, Lithiumisopropylalkoholat, Natriumisopropylalkoholat, Kaliumisopropylalkoholat, Magnesiumisopropylalkoholat, Calciumisopropylalkoholat, Bariumisopropylalkoholat, Lithium-1-butylalkoholat, Natrium-1-butylalkoholat, Kalium-1-butylalkoholat, Magnesium-1-butylalkoholat, Calcium-1-butylalkoholat, Barium-1-butylalkoholat, Lithium-2-butylalkoholat, Natrium-2-butylalkoholat, Kalium-2-butylalkoholat, Magnesium-2-butylalkoholat, Calcium-2-butylalkoholat, Barium-2-butylalkoholat, Lithiumisobutylalkoholat, Natriumisobutylalkoholat, Kaliumisobutylalkoholat, Magnesiumisobutylalkoholat, Calciumisobutylalkoholat, Bariumisobutylalkoholat, Lithium-tert.-butylalkoholat, Natrium-tert.-butylalkoholat, Kalium-tert.-butylalkoholat, Magnesium-tert.-butylalkoholat, Calcium-tert.-butylalkoholat, Barium-tert.-butylalkoholat, Lithiumphenolat, Natriumphenolat, Kaliumphenolat, Magnesiumphenolat, Calciumphenolat und Bariumphenolat.

Selbstverständlich können auch Mischungen solcher Katalysatoren verwendet werden. Die Katalysatoren sind in einer Menge von 0,001 bis 5 Gew.-%, bevorzugt 0,01 bis 3 Gew.-%, bezogen auf die Gesamtmenge der Komponenten, in der Polyurethanzusammensetzung enthalten. Die Katalysatoren können Kristallwasser enthalten, wobei dieses bei der Berechnung der eingesetzten Katalysatorenmenge nicht berücksichtigt wird, d. h. die Wassermenge wird herausgerechnet. Besonders bevorzugt werden Tetraethylammoniumbenzoat und Tetrabutylammoniumhydroxid eingesetzt.

Eine erfindungsgemäße Variante schließt die polymere Anbindung solcher Katalysatoren B) an den Härter A) oder die hydroxylgruppenhaltigen Polymere C) mit ein. So können z. B. freie Alkohol-, Thio- oder Aminogruppen der Ammoniumsalze mit Säure-, Isocyanat-, oder Glycidylgruppen der Härter A) oder hydroxylgruppenhaltige Polymere C) umgesetzt werden, um die Katalysatoren B) in den polymeren Verbund zu integrieren.

Bei den hydroxylgruppen- oder amingruppenhaltigen Polymeren C) werden bevorzugt Polyester, Polyether, Polyacrylate, Polyurethane, Polyamidamine, Polyether und/oder Polycarbonate mit einer OH-Zahl von 20 bis 500 (in mg KOH/Gramm) bzw. einem vergleichbaren Amingehalt eingesetzt. Besonders bevorzugt werden Polyester mit einer OH-Zahl von 30 bis 150, einem mittleren Molekulargewicht von 500 bis 6 000 g/mol. Solche Bindemittel sind beispielsweise in EP 0 669 354 und EP 0 254 152 beschrieben worden. Selbstversändlich können auch Mischungen solcher Polymere eingesetzt werden.

Beachtet werden muss in diesem Zusammenhang, dass die Aktivität dieser Katalysatoren in Anwesenheit von Säuren deutlich abnimmt. Zu den herkömmlichen Reaktionspartnern der Härter A) gehören hydroxylgruppenhaltige Polyester. Aufgrund der Herstellungsweise von Polyestern tragen diese mitunter in geringem Umfang noch Säuregruppen. Der Gehalt der Polyester an Säuregruppen sollte unter 20 mg KOH/g betragen, da sonst die Katalysatoren zu sehr inhibiert werden. In Gegenwart von solchen Säuregruppen tragenden Polyestern bietet es sich an, die erwähnten Katalysatoren entweder im Überschuss, bezogen auf die Säuregruppen, zu verwenden oder aber reaktive Verbindungen zuzusetzen, die in der Lage sind, Säuregruppen abzufangen. Sowohl monofunktionelle als auch mehrfachfunktionelle Verbindungen können hierzu eingesetzt werden. Die möglicherweise vernetzende Wirkung der mehrfach funktionellen Verbindungen ist aufgrund der viskositätserhöhenden Wirkung zwar unerwünscht, stört aber in der Regel wegen der geringen Konzentration nicht.

Reaktive säureabfangende Verbindungen D) sind in der Lackchemie allgemein bekannt. So setzen sich beispielsweise Epoxyverbindungen, Carbodiimide, Hydroxyalkylamide oder 2-Oxazoline, aber auch anorganische Salze, wie Hydroxide, Hydrogencarbonate oder Carbonate, mit Säuregruppen bei erhöhten Temperaturen um. In Frage kommen dabei z. B. Triglycidyletherisocyanurat (TGIC), EPIKOTE^{®} 828 (Diglycidylether auf Basis Bisphenol A, Shell), Versaticsäureglycidylester, Ethylhexylglycidylether, Butylglycidylether, Polypox R 16 (Pentaerythrittetraglycidylether, UPPC AG) sowie andere Polypoxtypen mit freien Epoxygruppen, Vestagon EP HA 320, (Hydroxyalkylamid, Degussa AG), aber auch Phenylenbisoxazolin, 2-Methyl-2-oxazolin, 2-Hydroxyethyl-2-oxazolin, 2-Hydroxypropyl-2-oxazolin, 5-Hydroxypentyl-2-oxazolin, Natriumcarbonat und Calciumcarbonat. Selbstverständlich kommen auch Mischungen solcher Substanzen in Frage. Diese reaktiven Verbindungen können in Gewichtsanteilen von 0,1 bis 10 %, bevorzugt von 0,5 bis 3 %, bezogen auf die Gesamtformulierung, eingesetzt werden.

Säuren, die unter E) genannt werden, sind alle Stoffe, fest oder flüssig, organisch oder anorganisch, monomer oder polymer, die die Eigenschaften einer Brönstedt-oder einer Lewissäure besitzen. Als Beispiele seien genannt: Schwefelsäure, Essigsäure, Benzoesäure, Malonsäure, Terephthalsäure, aber auch Copolyester oder Copolyamide mit einer Säurezahl von mindestens 20.

Als Lösemittel unter F) kommen alle flüssigen Substanzen in Frage, die nicht mit anderen Inhaltstoffen reagieren, z. B. Aceton, Ethylacetat, Butylacetat, Xylol, Solvesso 100, Solvesso 150, Methoxypropylacetat und Dibasicester.

Erfindungsgemäß können die in der Lack- bzw. Klebstofftechnologie üblichen Zusatzstoffe G), wie Verlaufsmittel, z. B. Polysilicone oder Acrylate, Lichtschutzmittel, z. B. sterisch gehinderte Amine, oder andere Hilfsmittel, wie sie z. B. in EP 0 669 353 beschrieben wurden, in einer Gesamtmenge von 0,05 bis 5 Gew.-% zugesetzt werden. Füllstoffe und Pigmente wie z. B. Titandioxid können in einer Menge bis zu 50 Gew.-% der Gesamtzusammensetzung zugesetzt werden.

Optional können zusätzliche Katalysatoren, wie sie in der Polyurethanchemie bereits bekannt sind, enthalten sein. Es handelt sich hierbei hauptsächlich um metallorganischen Katalysatoren, wie z. B. Dibutylzinndilaurat, oder aber tertiäre Amine, wie z. B. 1,4-Diazabicylco[2,2,2,]octan, in Mengen von 0,001 bis 1 Gew.-%.

Die Homogenisierung aller Bestandteile zur Herstellung der erfindungsgemäßen Polyurethanzusammensetzung kann in geeigneten Aggregaten, wie z. B. beheizbaren Rührkesseln, Knetern oder auch Extrudern, erfolgen, wobei Temperaturobergrenzen von 120 bis 130 °C nicht überschritten werden sollten. Die gut vermischte Masse wird durch geeignete Auftragung, z. B. Walzen, Sprühen, auf das Substrat aufgebracht. Nach dem Auftrag werden die beschichteten Werkstücke zur Aushärtung 4 bis 60 Minuten auf eine Temperatur von 60 bis 220 °C, vorzugsweise 6 bis 30 Minuten bei 80 bis 160 °C erhitzt.

Nachfolgend wird der Gegenstand der Erfindung anhand von Beispielen näher erläutert.

### Beispiele:

| **Einsatzstoffe** | **Produktbeschreibung, Hersteller** |
|---|---|
| VESTAGON BF 1540 | Härter, Degussa AG, Coatings & Colorants, Uretdion-Gehalt: 16,8 %, Schmp.: 99-112 °C, T_{G}: 78 °C |
| TBAB | Tetrabutylammoniumbenzoat, Aldrich |

| | |
|---|---|
| Schmp.: Schmelzpunkt; T_{G}: Glasübergangspunkt; | |

Polyurethanzusammensetzungen [Lack] (Angaben in Gew.-%):

| **Beispiele** | **VESTAGON BF 1540** | **Butylacetat/Xylol 1:1** | **TBAB** |
|---|---|---|---|
| 1 | 38,1 | 60 | 1,9 |
| V1* | 40 | 60 | - |

| | | | |
|---|---|---|---|
| * nicht erfindungsgemäßes Vergleichsbeispiel | | | |

Die Polyurethanzusammensetzungen werden mit einem Rakel auf Stahlblech (Bonder 901) aufgerakelt und nach kurzem Ablüften des Lösemittels in einem Umluftofen 30 Minuten bei 150 °C ausgehärtet (Trockenschichtdicke 25 bis 30 µm).

| **Beispiel** | **MEK-Test** | **Pendelhärte** | **Bemerkung** |
|---|---|---|---|
| 1 | > 100 | 195 | ausgehärtet |
| V1* | 8 | Nicht messbar | nicht ausgehärtet |

## Patentansprüche

1. Hochreaktive, flüssige uretdiongruppenhaltige Polyurethanzusammensetzungen, mit einem Schmelzpunkt unterhalb von 40 °C, im Wesentlichen enthaltend
A) mindestens einen uretdiongruppenhaltigen Härter, basierend auf aliphatischen, (cyclo)aliphatischen und/oder cycloaliphatischen Polyisocyanaten und hydroxylgruppenhaltigen Verbindungen mit einem freien NCO-Gehalt von kleiner 5 Gew.-% und einem Uretdiongehalt von 1 bis 18 Gew.-% und
B) mindestens einen Katalysator aus der Gruppe der Katalysatoren
1. der Formel [NR¹R²R³R⁴]⁺ [R⁵COO]⁻, wobei R¹ bis R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ bis R⁴ verbrückt, unter Ausbildung von Cyclen, Bicyclen oder Tricyclen und die Verbrückungsatome neben Kohlenstoff auch Heteroatome sein können, mit 1 bis 18 Kohlenstoffatomen bedeuten und jeder Rest R¹ bis R⁴ zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen kann und R⁵ ein Alkyl-, Aryl-, Aralkyl-, Heteroaryl-, Alkoxyalkylrest, linear oder verzweigt, mit 1 bis 18 Kohlenstoffatomen darstellt und zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen kann,
2. der Formel [NR¹R²R³R⁴]⁺ [R ⁵]⁻, wobei R¹ bis R⁴ gleichzeitig oder unabhängig voneinander Alkyl-, Aryl-, Aralkyl-, Heteroaryl-, Alkoxyalkylreste, jeweils linear oder verzweigt, unverbrückt oder mit anderen Resten R¹ bis R⁴ verbrückt, unter Ausbildung von Cyclen, Bicyclen oder Tricyclen und die Verbrückungsatome neben Kohlenstoff auch Heteroatome sein können, mit 1 bis 18 Kohlenstoffatomen darstellen und jeder Rest R¹ bis R⁴ zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen kann und R⁵ entweder OH oder F bedeutet,
3. der Formel M (OR¹)ₙ (OR²)ₘ (OR³)ₒ (OR⁴)ₚ (OR⁵)_{q} (OR⁶)ᵣ, wobei M ein Metall in beliebiger positiver Oxidationsstufe und identisch mit der Summe n+m+o+p+q+r ist, m, o, p, q, r ganze Zahlen von 0 bis 6 darstellen und für die Summe n+m+o+p+q+r = 1 bis 6 gilt, die Reste R¹ bis R⁶ gleichzeitig oder unabhängig voneinander Wasserstoff oder Alkyl-, Aryl-, Aralkyl-, Heteroaryl-, Alkoxyalkylreste mit 1 bis 8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Säure-, Urethan-, Harnstoff-, Allophanatgruppen, Doppelbindungen, Dreifachbindungen oder Halogenatome aufweisen können,
wobei diese Katalysatoren aus den Gruppen 1 bis 3 einzeln oder in Mischungen mit einer inerten Hülle umgeben und damit verkapselt sein können;
C) gegebenenfalls ein hydroxylgruppenhaltiges oder amingruppenhaltiges Polymer mit einer OH-Zahl zwischen 20 und 500 mg KOH/Gramm bzw. einem vergleichbaren Amingehalt;
D) gegebenenfalls mindestens eine gegenüber Säuregruppen reaktive Verbindung mit einem Gewichtsanteil, bezogen auf die Gesamtformulierung, von 0,1 bis 10 %;
E) gegebenenfalls mindestens eine Säure in monomerer oder polymerer Form in einem Gewichtsanteil, bezogen auf die Gesamtformulierung, von 0,1 bis 10%;
F) gegebenenfalls Lösemittel;
G) gegebenenfalls Hilfs- und Zusatzstoffe; so dass der Anteil des Katalysators unter B) 0,001 bis 5 Gew.-% an der Gesamtmenge der Komponenten beträgt.

2. Polyurethanzusammensetzung nach Anspruch 1,
**dadurch gekennzeichnet,**
**dass** die beiden Komponenten A) und C) in einem beliebigen Verhältnis vorliegen.

3. Polyurethanzusammensetzung nach mindestens einem der vorhergehenden Ansprüche,
**dadurch gekennzeichnet,**
**dass** als Einsatzstoffe für die Komponenten A) Uretdiongruppen enthaltende Polyisocyanate, ausgewählt aus Isophorondiisocyanat (IPDI), Hexamethylendiisocyanat (HDI), 2-Methylpentandiisocyanat (MPDI), 2,2,4-Trimethylhexamethylendiisocyanat/2,4,4-Trimethylhexamthylendiisocyanat (TMDI), Norbornandiisocyanat (NBDI) eingesetzt werden.

4. Polyurethanzusammensetzung nach Anspruch 3,
**dadurch gekennzeichnet,**
**dass** IPDI und/oder HDI eingesetzt werden.

5. Polyurethanzusammensetzung nach mindestens einem der vorhergehenden Ansprüche,
**dadurch gekennzeichnet,**
**dass** als Einsatzstoffe für die Uretdiongruppen aufweisenden Härter A) hydroxylgruppenhaltige Monomere und/oder Polymere eingesetzt werden.

6. Polyurethanzusammensetzung nach Anspruch 5,
**dadurch gekennzeichnet,**
**dass** hydroxylgruppenhaltige Verbindungen, ausgewählt aus Polythioethern, Polyethern, Polycaprolactamen, Polyepoxiden, Polyesteramiden, Polyurethanen und/oder niedermolekularen Di-, Tri- und/oder Tetraalkoholen als Kettenverlängerer und/oder gegebenenfalls Monoaminen und/oder Monoalkoholen als Kettenabbrecher, eingesetzt werden.

7. Polyurethanzusammensetzung nach mindestens einem der vorhergehenden Ansprüche,
**dadurch gekennzeichnet,**
**dass** die Härter A) einen freien NCO-Gehalt von weniger als 5 Gew.-% und einen Gehalt an Uretdiongruppen von 1 bis 18 Gew.-% (berechnet als C₂N₂O₂, Molekulargewicht 84) aufweisen.

8. Polyurethanzusammensetzung nach mindestens einem der vorhergehenden Ansprüche,
**dadurch gekennzeichnet,**
**dass** die Härter A) auch Isocyanurat-, Biuret-, Allophanat-, Urethan- und/oder Harnstoff-Strukturen aufweisen.

9. Polyurethanzusammensetzung nach mindestens einem der vorhergehenden Ansprüche,
**dadurch gekennzeichnet,**
**dass** Katalysatoren 1. ausgewählt aus Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat Tetrabutylammoniumformiat, Tetrabutylammoniumacetat, Tetrabutylammoniumpropionat, Tetrabutylammoniumbutyrat und/oder Tetrabutylammoniumbenzoat eingesetzt werden.

10. Polyurethanzusammensetzung nach mindestens einem der vorhergehenden Ansprüche,
**dadurch gekennzeichnet,**
**dass** Katalysatoren 2. ausgewählt aus Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Tetramethylammoniumfluorid, Tetraethylammoniumfluorid, Tetrabutylammoniumfluorid, Tetraoctylammoniumfluorid und/oder Benzyltrimethylammoniumfluorid eingesetzt werden.

11. Polyurethanzusammensetzung nach mindestens einem der vorhergehenden Ansprüche,
**dadurch gekennzeichnet,**
**dass** Katalysatoren 3. ausgewählt aus Lithiumhydroxid, Natriumhydroxid, Kaliumhydroxid, Rubidiumhydroxid, Cäsiumhydroxid, Berilliumiumhydroxid, Magnesiumhydroxid, Calziumhydroxid, Strontiumhydroxid, Bariumhydroxid, Aluminiumhydroxid, Zinkhydroxid, Lithiummethanolat, Natriummethanolat, Kaliummethanolat, Magnesiummethanolat, Calziummethanolat, Bariummethanolat, Lithiumethanolat, Natriumethanolat, Kaliumethanolat, Magnesiumethanolat, Calziumethanolat, Bariumethanolat, Lithiumpropylalkoholat, Natriumpropylalkoholat, Kaliumpropylalkoholat, Magnesiumpropylalkoholat, Calziumpropylalkoholat, Bariumpropylalkoholat, Lithiumisopropylalkoholat, Natriumisopropylalkoholat, Kaliumisopropylalkoholat, Magnesiumisopropylalkoholat, Calziumisopropylalkoholat, Bariumisopropylalkoholat, Lithium-1-butylalkoholat, Natrium-1-butylalkoholat, Kalium-1-butylalkoholat, Magnesium-1-butylalkoholat, Calzium-1-butylalkoholat, Barium-1-butylalkoholat, Lithium-2-butylalkoholat, Natrium-2-butylalkoholat, Kalium-2-butylalkoholat, Magnesium-2-butylalkoholat, Calzium-2-butylalkoholat, Barium-2-butylalkoholat, Lithiumisobutylalkoholat, Natriumisobutylalkoholat, Kaliumisobutylalkoholat, Magnesiumisobutylalkoholat, Calziumisobutylalkoholat, Bariumisobutylalkoholat, Lithium-tert.-butylalkoholat, Natrium-tert.-butylalkoholat, Kalium-tert.-butylalkoholat, Magnesium-tert.-butylalkoholat, Calzium-tert.-butylalkoholat, Barium-tert.-butylalkoholat, Lithiumphenolat, Natriumphenolat, Kaliumphenolat, Magnesiumphenolat, Calziumphenolat und/oder Bariumphenolat eingesetzt werden.

12. Polyurethanzusammensetzung nach mindestens einem der vorhergehenden Ansprüche,
**dadurch gekennzeichnet,**
**dass** als Katalysatoren Tetraethylammoniumbenzoat und Tetrabutylammoniumhydroxid eingesetzt werden.

13. Polyurethanzusammensetzung nach mindestens einem der vorhergehenden Ansprüche,
**dadurch gekennzeichnet,**
**dass** Katalysatoren in einer Menge von 0,01 bis 3 Gew.-%, bezogen auf die Gesamtmenge der Komponenten enthalten sind.

14. Polyurethanzusammensetzung nach mindestens einem der vorhergehenden Ansprüche,
**dadurch gekennzeichnet,**
**dass** als hydroxylgruppen- oder amingruppenhaltige Polymeren C) Polyester, Polyether, Polyacrylate, Polyurethane, Polyamidamine, Polyether und/oder Polycarbonate mit einer OH-Zahl von 20 bis 500 (in mg KOH/Gramm) bzw. einem vergleichbaren Amingehalt eingesetzt werden.

15. Polyurethanzusammensetzung nach Anspruch 14,
**dadurch gekennzeichnet,**
**dass** Polyester mit einer OH-Zahl von 30 bis 150 und einem mittleren Molekulargewicht von 500 bis 6 000 g/mol eingesetzt werden.

16. Polyurethanzusammensetzung nach mindestens einem der vorhergehenden Ansprüche,
**dadurch gekennzeichnet,**
**dass** als reaktive säureabfangende Verbindungen D) Epoxyverbindungen, Carbodiimide, Hydroxyalkylamide oder 2-Oxazoline, anorganische Salze, wie Hydroxide, Hydrogencarbonate und/oder Carbonate, eingesetzt werden.

17. Polyurethanzusammensetzung nach Anspruch 16,
**dadurch gekennzeichnet,**
**dass** Triglycidyletherisocyanurat (TGIC), EPIKOTE^{®} 828 (Diglycidylether auf Basis Bisphenol A, Shell), Versaticsäureglycidylester, Ethylhexylglycidylether, Butylglycidylether, Polypox R 16 (Pentaerythrittetraglycidylether, UPPC AG) Hydroxyalkylamid, Phenylenbisoxazolin, 2-Methyl-2-oxazolin, 2-Hydroxyethyl-2-oxazolin, 2-Hydroxypropyl-2-oxazolin, 5-Hydroxypentyl-2-oxazolin, Natriumcarbonat und/oder Calciumcarbonat eingesetzt werden.

18. Polyurethanzusammensetzung nach mindestens einem der vorhergehenden Ansprüche,
**dadurch gekennzeichnet,**
**dass** als Komponente E) Schwefelsäure, Essigsäure, Benzoesäure, Malonsäure, Terephthalsäure und/oder Copolyester und/oder Copolyamide mit einer Säurezahl von mindestens 20 eingesetzt werden.

19. Polyurethanzusammensetzung nach mindestens einem der vorhergehenden Ansprüche,
**dadurch gekennzeichnet,**
**dass** als Lösemittel F) Aceton, Ethylacetat, Butylacetat, Xylol, Solvesso 100, Solvesso 150, Methoxypropylacetat und/oder Dibasicester eingesetzt werden.

20. Polyurethanzusammensetzung nach mindestens einem der vorhergehenden Ansprüche,
**dadurch gekennzeichnet,**
**dass** als Komponente G) Verlaufsmittel, Lichtschutzmittel, Füllstoffe und Pigmente zugesetzt werden.

21. Polyurethanzusammensetzung nach mindestens einem der vorhergehenden Ansprüche,
**dadurch gekennzeichnet,**
**dass** zusätzliche Katalysatoren, ausgewählt aus metallorganischen Katalysatoren oder tertiärem Amin, eingesetzt werden.

22. Verfahren zur Herstellung von Polyurethanzusammensetzungen nach mindestens einem der vorherigen Ansprüche in beheizbaren Aggregaten bei Temperaturen unterhalb von 130 °C.

23. Verwendung der Polyurethanzusammensetzung nach mindestens einem der Ansprüche 1 bis 22 zur Herstellung von Beschichtungen auf Metall-, Kunststoff-, Glas-, Holz- oder Ledersubstraten.

24. Verwendung der Polyurethanzusammensetzung nach mindestens einem der Ansprüche 1 bis 22 zur Herstellung von Verklebungen auf Metall-, Kunststoff-, Glas-, Holz- oder Ledersubstraten oder sonstigen hitzeresistenten Untergründen.

25. Metallbeschichtungszusammensetzungen, Holzbeschichtungszusammensetzungen, Glasbeschichtungszusammensetzungen, Lederbeschichtungszusammensetzungen und Kunststoffbeschichtungszusammensetzungen, welche eine Polyurethanzusammensetzung nach mindestens einem der Ansprüche 1 bis 22 enthalten.

## Claims

1. High-reactivity liquid polyurethane compositions containing uretdione groups, and having a melting point of below 40°C, essentially comprising
A) at least one curing agent which contains uretdione groups and is based on aliphatic, (cyclo)aliphatic and/or cycloaliphatic polyisocyanates and hydroxyl-containing compounds and has a free NCO content of less than 5% by weight and a uretdione content of from 1 to 18% by weight and
B) at least one catalyst selected from the group consisting of catalysts
1. of the formula [NR¹R²R³R⁴]⁺ [R⁵COO]⁻, where R¹ to R⁴ simultaneously or independently of one another are alkyl, aryl, aralkyl, heteroaryl or alkoxyalkyl radicals having 1 to 18 carbon atoms, in each case linear or branched, unbridged or bridged with other radicals R¹ to R⁴, to form monocyclic, bicyclic or tricyclic systems, it being possible for the bridging atoms to include not only carbon but also heteroatoms and, additionally, for each radical R¹ to R⁴ to have one or more alcohol, amino, ester, keto, thio, urethane, urea or allophanate groups, double bonds, triple bonds or halogen atoms, and R⁵ is an alkyl, aryl, aralkyl, heteroaryl or alkoxyalkyl radical having 1 to 18 carbon atoms which is linear or branched and additionally may have one or more alcohol, amino, ester, keto, thio, acid, urethane, urea or allophanate groups, double bonds, triple bonds or halogen atoms,
2. of the formula [NR¹R²R³R⁴]⁺ [R⁵]⁻, where R¹ to R⁴ simultaneously or independently of one another are alkyl, aryl, aralkyl, heteroaryl or alkoxyalkyl radicals having 1 to 18 carbon atoms, in each case linear or branched, unbridged or bridged with other radicals R¹ to R⁴, to form monocyclic, bicyclic or tricyclic systems, it being possible for the bridging atoms to include not only carbon but also heteroatoms and, additionally, for each radical R¹ to R⁴ to have one or more alcohol, amino, ester, keto, thio, acid, urethane, urea or allophanate groups, double bonds, triple bonds or halogen atoms, and R⁵ is either OH or F,
3. of the formula M (OR¹)ₙ (OR²)ₘ (OR³)ₒ (OR⁴)ₚ (OR⁵)_{q} (OR⁶)ᵣ, where M is a metal in any positive oxidation state and is identical to the sum n+m+o+p+q+r, m, o, p, q, and r are integers from 0 to 6 and the sum n+m+o+p+q+r = 1 to 6, the radicals R¹ to R⁶ simultaneously or independently of one another are hydrogen or alkyl, aryl, aralkyl, heteroaryl or alkoxyalkyl radicals having 1 to 8 carbon atoms and the radicals may in each case be linear or branched, unbridged or bridged with other radicals, to form monocyclic, bicyclic or tricyclic systems, and the bridging atoms may in addition to carbon also be heteroatoms and additionally may have one or more alcohol, amino, ester, keto, thio, acid, urethane, urea or allophanate groups, double bonds, triple bonds or halogen atoms, it being possible for these catalysts from the groups 1 to 3, individually or in mixtures, to be surrounded by an inert shell and hence encapsulated;
C) if desired, a hydroxyl-containing or amino-containing polymer having an OH number of between 20 and 500 mg KOH/gram or a comparable amine content;
D) if desired, at least one compound which is reactive toward acid groups and has a weight fraction, based on the total formulation, of from 0.1 to 10%;
E) if desired, at least one acid in monomeric or polymeric form, in a weight fraction, based on the total formulation, of from 0.1 to 10%;
F) if desired, solvents;
G) if desired, auxiliaries and additives;
so that the fraction of the catalyst under B) is from 0.001 to 5% by weight of the total amount of the components.

2. Polyurethane composition according to Claim 1,
**characterized in that**
the two components A) and C) are present in any desired proportion.

3. Polyurethane composition according to one or both of the preceding claims,
**characterized in that**
polyisocyanates containing uretdione groups and selected from isophorone diisocyanate (IPDI), hexamethylene diisocyanate (HDI), 2-methylpentane diisocyanate (MPDI), 2,2,4-trimethylhexamethylene diisocyanate/2,4,4-trimethylhexamethylene diisocyanate (TMDI), norbornane diisocyanate (NBDI) are used as starting components for components A).

4. Polyurethane composition according to Claim 3,
**characterized in that**
IPDI and/or HDI are/is used.

5. Polyurethane composition according to at least one of the preceding claims,
**characterized in that**
hydroxyl-containing monomers and/or polymers are used as starting materials for the curing agents A) containing uretdione groups.

6. Polyurethane composition according to Claim 5,
**characterized in that**
hydroxyl-containing compounds selected from polythioethers, polyethers, polycaprolactams, polyepoxides, polyesteramides, polyurethanes and/or low molecular mass di-, tri- and/or tetraalcohols as chain extenders and/or, if desired, monoamines and/or monoalcohols as chain terminators are used.

7. Polyurethane composition according to at least one of the preceding claims,
**characterized in that**
the curing agents A) have a free NCO content of less than 5% by weight and a uretdione group content of from 1 to 18% by weight (calculated as C₂N₂O₂, molecular weight 84).

8. Polyurethane composition according to at least one of the preceding claims,
**characterized in that**
the curing agents A) also have isocyanurate, biuret, allophanate, urethane and/or urea structures.

9. Polyurethane composition according to at least one of the preceding claims,
**characterized in that**
catalysts 1. selected from tetramethylammonium formate, tetramethylammonium acetate, tetramethylammonium propionate, tetramethylammonium butyrate, tetramethylammonium benzoate, tetraethylammonium formate, tetraethylammonium acetate, tetraethylammonium propionate, tetraethylammonium butyrate, tetraethylammonium benzoate, tetrapropylammonium formate, tetrapropylammonium acetate, tetrapropylammonium propionate, tetrapropylammonium butyrate, tetrapropylammonium benzoate, tetrabutylammonium formate, tetrabutylammonium acetate, tetrabutylammonium propionate, tetrabutylammonium butyrate and/or tetrabutylammonium benzoate are used.

10. Polyurethane composition according to at least one of the preceding claims,
**characterized in that**
catalysts 2. selected from methyltributylammonium hydroxide, methyltriethylammonium hydroxide, tetramethylammonium hydroxide, tetraethylammonium hydroxide, tetrapropylammonium hydroxide, tetrabutylammonium hydroxide, tetrapentylammonium hydroxide, tetrahexylammonium hydroxide, tetraoctylammonium hydroxide, tetradecylammonium hydroxide, tetradecyltrihexylammonium hydroxide, tetraoctadecylammonium hydroxide, benzyltrimethylammonium hydroxide, benzyltriethylammonium hydroxide, trimethylphenylammonium hydroxide, triethylmethylammonium hydroxide, trimethylvinylammonium hydroxide, tetramethylammonium fluoride, tetraethylammonium fluoride, tetrabutylammonium fluoride, tetraoctylammonium fluoride and/or benzyltrimethylammonium fluoride are used.

11. Polyurethane composition according to at least one of the preceding claims,
**characterized in that**
catalysts 3. selected from lithium hydroxide, sodium hydroxide, potassium hydroxide, rubidium hydroxide, cesium hydroxide, beryllium hydroxide, magnesium hydroxide, calcium hydroxide, strontium hydroxide, barium hydroxide, aluminum hydroxide, zinc hydroxide, lithium methoxide, sodium methoxide, potassium methoxide, magnesium methoxide, calcium methoxide, barium methoxide, lithium ethoxide, sodium ethoxide, potassium ethoxide, magnesium ethoxide, calcium ethoxide, barium ethoxide, lithium propoxide, sodium propoxide, potassium propoxide, magnesium propoxide, calcium propoxide, barium propoxide, lithium isopropoxide, sodium isopropoxide, potassium isopropoxide, magnesium isopropoxide, calcium isopropoxide, barium isopropoxide, lithium 1-butoxide, sodium 1-butoxide, potassium 1-butoxide, magnesium 1-butoxide, calcium 1-butoxide, barium 1-butoxide, lithium 2-butoxide, sodium 2-butoxide, potassium 2-butoxide, magnesium 2-butoxide, calcium 2-butoxide, barium 2-butoxide, lithium isobutoxide, sodium isobutoxide, potassium isobutoxide, magnesium isobutoxide, calcium isobutoxide, barium isobutoxide, lithium tert-butoxide, sodium tert-butoxide, potassium tert-butoxide, magnesium tert-butoxide, calcium tert-butoxide, barium tert-butoxide, lithium phenoxide, sodium phenoxide, potassium phenoxide, magnesium phenoxide, calcium phenoxide and/or barium phenoxide are used.

12. Polyurethane composition according to at least one of the preceding claims,
**characterized in that**
tetraethylammonium benzoate and tetrabutylammonium hydroxide are used as catalysts.

13. Polyurethane composition according to at least one of the preceding claims,
**characterized in that**
catalysts are present in an amount of from 0.01 to 3% by weight, based on the total amount of the components.

14. Polyurethane composition according to at least one of the preceding claims,
**characterized in that**
polyesters, polyethers, polyacrylates, polyurethanes, polyamidoamines, polyethers and/or polycarbonates having an OH number of from 20 to 500 (in mg KOH/gram) or a comparable amine content are used as hydroxyl-containing or amino-containing polymers C).

15. Polyurethane composition according to Claim 14,
**characterized in that**
polyesters having an OH number of from 30 to 150 and an average molecular weight of from 500 to 6000 g/mol are used.

16. Polyurethane composition according to at least one of the preceding claims,
**characterized in that**
epoxy compounds, carbodiimides, hydroxyalkylamides or 2-oxazolines, inorganic salts, such as hydroxides, hydrogencarbonates and/or carbonates, are used as reactive, acid-scavenging compounds D) .

17. Polyurethane composition according to Claim 16,
**characterized in that**
triglycidyl ether isocyanurate (TGIC), EPIKOTE^{®} 828 (diglycidyl ether based on bisphenol A, Shell), Versatic acid glycidyl esters, ethylhexyl glycidyl ether, butyl glycidyl ether, Polypox R 16 (pentaerythritol tetraglycidyl ether, UPPC AG) hydroxyalkylamide, phenylenebisoxazoline, 2-methyl-2-oxazoline, 2-hydroxyethyl-2-oxazoline, 2-hydroxypropyl-2-oxazoline, 5-hydroxypentyl-2-oxazoline, sodium carbonate and/or calcium carbonate are used.

18. Polyurethane composition according to at least one of the preceding claims,
**characterized in that**
sulfuric acid, acetic acid, benzoic acid, malonic acid, terephthalic acid and/or copolyesters and/or copolyamides having an acid number of at least 20 are used as component E).

19. Polyurethane composition according to at least one of the preceding claims,
**characterized in that**
acetone, ethyl acetate, butyl acetate, xylene, Solvesso 100, Solvesso 150, methoxypropyl acetate and/or Dibasic ester are used as solvents F).

20. Polyurethane composition according to at least one of the preceding claims,
**characterized in that**
leveling agents, light stabilizers, fillers, and pigments are added as component G).

21. Polyurethane composition according to at least one of the preceding claims,
**characterized in that**
additional catalysts selected from organometallic catalysts or tertiary amine are used.

22. Process for preparing polyurethane compositions according to at least one of the previous claims in heatable apparatus at temperatures below 130°C.

23. Use of the polyurethane composition according to at least one of Claims 1 to 22 for producing coatings on metal, plastic, glass, wood or leather substrates.

24. Use of the polyurethane composition according to at least one of Claims 1 to 22 for producing adhesive bonds on metal, plastic, glass, wood or leather substrates or other heat-resistant substrates.

25. Metal-coating, wood-coating, glass-coating, leather-coating and plastics-coating compositions which comprise a polyurethane composition according to at least one of Claims 1 to 22.

## Revendications

1. Compositions de polyuréthanne liquides hautement réactives, comportant des groupes uretdione, ayant un point de fusion inférieur à 40 °C, contenant essentiellement
A) au moins un durcisseur comportant des groupes uretdione, à base de polyisocyanates aliphatiques, (cyclo)aliphatiques et/ou cycloaliphatiques et de composés comportant des groupes hydroxy, ayant une teneur en groupes NCO libres inférieure à 5 % en poids et une teneur en uretdione de 1 à 18 % en poids et
B) au moins un catalyseur choisi dans le groupe des catalyseurs
1. de formule [NR¹R²R³R⁴]⁺[R⁵COO]⁻, R¹à R⁴ représentant, simultanément ou indépendamment les uns des autres, des radicaux alkyle, aryle, aralkyle, hétéroaryle, alcoxyalkyle ayant de 1 à 18 atomes de carbone, chacun linéaire ou ramifié, non ponté ou ponté avec d'autres radicaux R¹ à R⁴, avec formation de cycles, bicycles ou tricycles et les atomes qui forment un pont pouvant être, outre des atomes de carbone, également des hétéroatomes et chaque radical R¹ à R⁴ pouvant en outre comporter encore un ou plusieurs groupes alcool, amino, ester, céto, thio, uréthanne, urée, allophanate, une ou plusieurs doubles liaisons, triples liaisons ou un ou plusieurs atomes d'halogène, et R⁵ représentant un radical alkyle, aryle, aralkyle, hétéroaryle, alcoxyalkyle, linéaire ou ramifié, ayant de 1 à 18 atomes de carbone et pouvant en outre comporter encore un ou plusieurs groupes alcool, amino, ester, céto, thio, acide, uréthanne, urée, allophanate, une ou plusieurs doubles liaisons, triples liaisons ou un ou plusieurs atomes d'halogène
2. de formule [NR¹R²R³R⁴]⁺[R⁵], R¹ à R⁴ représentant, simultanément ou indépendamment les uns des autres, des radicaux alkyle, aryle, aralkyle, hétéroaryle, alcoxyalkyle ayant de 1 à 18 atomes de carbone, chacun linéaire ou ramifié, non ponté ou ponté avec d'autres radicaux R¹ à R⁴ avec formation de cycles, bicycles ou tricycles et les atomes qui forment un pont pouvant être, outre des atomes de carbone, également des hétéroatomes et chaque radical R¹ à R⁴ pouvant en outre comporter encore un ou plusieurs groupes alcool, amino, ester, céto, thio, acide, uréthanne, urée, allophanate, une ou plusieurs doubles liaisons, triples liaisons ou un ou plusieurs atomes d'halogène, et R⁵ représentant soit OH, soit F,
3. de formule M (OR¹)ₙ(OR²)ₘ(OR³)ₒ(OR⁴)p(OR⁵)q(OR⁶)ᵣ, M représentant un métal à degré d'oxydation positif quelconque et identique à la somme n+m+o+p+q+r, m, o, p, q, r représentant des nombres entiers allant de 0 à 6 et la somme n+m+o+p+q+r valant des nombres entiers allant de 1 à 6, les radicaux R¹ à R⁶ représentant, simultanément ou indépendamment les uns des autres, des atomes d'hydrogène ou des radicaux alkyle, aryle, aralkyle, hétéroaryle, alcoxyalkyle ayant de 1 à 8 atomes de carbone et les radicaux pouvant être chacun linéaire ou ramifié, non ponté ou ponté avec d'autres radicaux, avec formation de cycles, bicycles ou tricycles et les atomes qui forment un pont pouvant être, outre des atomes de carbone, également des hétéroatomes et pouvant en outre comporter encore un ou plusieurs groupes alcool, amino, ester, céto, thio, acide, uréthanne, urée, allophanate, une ou plusieurs doubles liaisons, triples liaisons ou un ou plusieurs atomes d'halogène,
ces catalyseurs des groupes 1 à 3 pouvant, individuellement ou en mélanges, être entourés d'une enveloppe inerte et encapsulés avec celle-ci ;
C) éventuellement un polymère comportant des groupes hydroxy ou comportant des groupes amino, ayant un indice de groupes OH compris entre 20 et 500 mg de KOH/gramme ou une teneur comparable en amine ;
D) éventuellement au moins un composé réactif vis-à-vis de groupes acides, présent en une proportion pondérale, par rapport à la composition totale, de 0,1 à 10 % ;
E) éventuellement au moins un acide sous forme monomère ou polymère en une proportion pondérale, par rapport à la composition totale, de 0,1 à 10 % ;
F) éventuellement des solvants ;
G) éventuellement des adjuvants et additifs ; de sorte que la proportion du catalyseur en B) va de 0,001 à 5 % en poids de la quantité totale des composants.

2. Composition de polyuréthanne selon la revendication 1, **caractérisée en ce que** les deux composants A) et C) sont présents en un rapport quelconque.

3. Composition de polyuréthanne selon au moins l'une des revendications précédentes, **caractérisée en ce qu'**on utilise comme produits de départ pour les composants A) des polyisocyanates contenant des groupes uretdione, choisis parmi l'isophorone-diisocyanate (IPDI), l'hexaméthylène-diisocyanate (HDI), le 2-méthylpentane-diisocyanate (MPDI), le 2,2,4-trimethylhexaméthylène-diisocyanate/2,4,4-triméthylhexaméthylènediisocyanate (TMDI), le norbornane-diisocyanate (NBDI).

4. Composition de polyuréthanne selon la revendication 3, **caractérisée en ce qu'**on utilise l'IPDI ou le HDI.

5. Composition de polyuréthanne selon au moins l'une des revendications précédentes, **caractérisée en ce que** comme produits de départ pour les durcisseurs A) comportant des groupes uretdione on utilise des monomères et/ou polymères comportant des groupes hydroxy.

6. Composition de polyuréthanne selon la revendication 5, **caractérisé en ce qu'**on utilise des composés comportant des groupes hydroxy, choisis parmi des polythioéthers, des polyéthers, des polycaprolactames, des polyépoxydes, des polyesteramides, des polyuréthannes et/ou des diols, triols et/ou tétraols de faible masse moléculaire en tant que prolongateurs de chaîne et/ou éventuellement des monoamines et/ou des monoalcools en tant que rupteurs de chaîne.

7. Composition de polyuréthanne selon au moins l'une des revendications précédentes, **caractérisée en ce que** les durcisseurs A) ont une teneur en groupes NCO libres de moins de 5 % en poids et une teneur en groupes uretdione de 1 à 18 % en poids (calculée en tant que C₂N₂O₂, masse moléculaire 84).

8. Composition de polyuréthanne selon au moins l'une des revendications précédentes, **caractérisée en ce que** les durcisseurs A) présentent également des structures isocyanurate, biuret, allophanate, uréthanne et/ou urée.

9. Composition de polyuréthanne selon au moins l'une des revendications précédentes, **caractérisée en ce qu'**on utilise des catalyseurs 1 choisis parmi le formiate de tétraméthylammonium, l'acétate de tétraméthylammonium, le propionate de tétraméthylammonium, le butyrate de tétraméthylammonium, le benzoate de tétraméthylammonium, le formiate de tétraéthylammonium, l'acétate de tétraéthylammonium, le propionate de tétraéthylammonium, le butyrate de tétraéthylammonium, le benzoate de tétraéthylammonium, le formiate de tétrapropylammonium, l'acétate de tétrapropylammonium, le propionate de tétrapropylammonium, le butyrate de tétrapropylammonium, le benzoate de tétrapropylammonium, le formiate de tétrabutylammonium, l'acétate de tétrabutylammonium, le propionate de tétrabutylammonium, le butyrate de tétrabutylammonium et/ou le benzoate de tétrabutylammonium.

10. Composition de polyuréthanne selon au moins l'une des revendications précédentes, **caractérisée en ce qu'**on utilise des catalyseurs 2. choisis parmi l'hydroxyde de méthyltributylammonium, l'hydroxyde de méthyltriéthylammonium, l'hydroxyde de tétraméthylammonium, l'hydroxyde de tétraéthylammonium, l'hydroxyde de tétrapropylammonium, l'hydroxyde de tétrabutylammonium, l'hydroxyde de tétrapentylammonium, l'hydroxyde de tétrahexyl-ammonium, l'hydroxyde de tétraoctylammonium, l'hydroxyde de tétradécylammonium, l'hydroxyde de tétradécyltrihexylammonium, l'hydroxyde de tétra-octadécylammonium, l'hydroxyde de benzyltriméthylammonium, l'hydroxyde de benzyltriéthylammonium, l'hydroxyde de triméthylphénylammonium, l'hydroxyde de triéthylméthylammonium, l'hydroxyde de triméthylvinylammonium, le fluorure de tétraméthylammonium, le fluorure de tétraéthylammonium, le fluorure de tétrabutylammonium, le fluorure de tétraoctylammonium et/ou le fluorure de benzyltriméthylammonium.

11. Composition de polyuréthanne selon au moins l'une des revendications précédentes, **caractérisée en ce qu'**on utilise des catalyseurs 3 choisis parmi l'hydroxyde de lithium, l'hydroxyde de sodium, l'hydroxyde de potassium, l'hydroxyde de rubidium, l'hydroxyde de césium, l'hydroxyde de béryllium, l'hydroxyde de magnésium, l'hydroxyde de calcium, l'hydroxyde de strontium, l'hydroxyde de baryum, l'hydroxyde d'aluminium, l'hydroxyde de zinc, le méthanolate de lithium, le méthanolate de sodium, le méthanolate de potassium, le méthanolate de magnésium, le méthanolate de calcium, le méthanolate de baryum, l'éthanolate de lithium, l'éthanolate de sodium, l'éthanolate de potassium, l'éthanolate de magnésium, l'éthanolate de calcium, l'éthanolate de baryum, le propylate de lithium, le propylate de sodium, le propylate de potassium, le propylate de magnésium, le propylate de calcium, le propylate de baryum, l'isopropylate de lithium, l'isopropylate de sodium, l'isopropylate de potassium, l'isopropylate de magnésium, l'isopropylate de calcium, l'isopropylate de baryum, le 1-butylate de lithium, le 1-butylate de sodium, le 1-butylate de potassium, le 1-butylate de magnésium, le 1-butylate de calcium, le 1-butylate de baryum, le 2-butylate de lithium, le 2-butylate de sodium, le 2-butylate de potassium, le 2-butylate de magnésium, le 2-butylate de calcium, le 2-butylate de baryum, l'isobutylate de lithium, l'isobutylate de sodium, l'isobutylate de potassium, l'isobutylate de magnésium, l'isobutylate de calcium, l'isobutylate de baryum, le tert-butylate de lithium, le tert-butylate de sodium, le tert-butylate de potassium, le tert-butylate de magnésium, le tert-butylate de calcium, le tert-butylate de baryum, le phénolate de lithium, le phénolate de sodium, le phénolate de potassium, le phénolate de magnésium, le phénolate de calcium et/ou le phénolate de baryum.

12. Composition de polyuréthanne selon au moins l'une des revendications précédentes, **caractérisée en ce qu'**on utilise comme catalyseurs le benzoate de tétraéthylammonium et l'hydroxyde de tétrabutylammonium.

13. Composition de polyuréthanne selon au moins l'une des revendications précédentes, **caractérisée en ce que** les catalyseurs sont contenus en une quantité de 0,01 à 3 % en poids, par rapport à la quantité totale des composants.

14. Composition de polyuréthanne selon au moins l'une des revendications précédentes, **caractérisée en ce qu'**en tant que polymères C) comportant des groupes hydroxy ou des groupes amino on utilise des polyesters, des polyéthers, des polyacrylates, des polyuréthannes, des poly(amide-amine)s, des polyéthers et/ou des polycarbonates ayant un indice de groupes OH de 20 à 500 (en mg de KOH/gramme) ou ayant une teneur comparables en amine.

15. Composition de polyuréthanne selon la revendication 14, **caractérisée en ce qu'**on utilise des polyesters ayant un indice de groupes OH de 30 à 150 et une masse moléculaire moyenne de 500 à 6 000 g/mole.

16. Composition de polyuréthanne selon au moins l'une des revendications précédentes, **caractérisée en ce qu'**on utilise comme composés D) réactifs capteurs d'acides des composés époxy, des carbodiimides, des hydroxyalkylamides ou des 2-oxazolines, des sels inorganiques, tels que des hydroxydes, des hydrogénocarbonates et/ou des carbonates.

17. Composition de polyuréthanne selon la revendication 16, **caractérisée en ce qu'**on utilise l'isocyanurate d'éther triglycidylique (TGIC), EPIKOTE® 828 (éther diglycidylique à base de bisphénol A, Shell), le versatate de glycidyle, l'éther éthylhexylglycidylique, l'éther butylglycidylique, Polypox R 16 (éther tétraglycidylique de pentaérythritol, UPPC AG), un hydroxyalkylamide, la phénylènebisoxazoline, la 2-méthyl-2-oxazoline, la 2-hydroxyéthyl-2-oxazoline, la 2-hydroxypropyl-2-oxazoline, la 5-hydroxypentyl-2-oxazoline, le carbonate de sodium et/ou le carbonate de calcium.

18. Composition de polyuréthanne selon au moins l'une des revendications précédentes, **caractérisée en ce qu'**on utilise comme compsant E) l'acide sulfurique, l'acide acétique, l'acide benzoïque, l'acide malonique, l'acide téréphtalique et/ou des copolyesters et/ou des copolyamides ayant un indice d'acide d'au moins 20.

19. Composition de polyuréthanne selon au moins l'une des revendications précédentes, **caractérisée en ce qu'**on utilise comme solvants F) l'acétone, l'acétate d'éthyle, l'acétate de butyle, le xylène, le Solvesso 100, le Solvesso 150, l'acétate de méthoxypropyle et/ou des esters dibasiques.

20. Composition de polyuréthanne selon au moins l'une des revendications précédentes, **caractérisée en ce qu'**en tant que composant G) on utilise des agents d'étalement, des photoprotecteurs, des charges et des pigments.

21. Composition de polyuréthanne selon au moins l'une des revendications précédentes, **caractérisée en ce qu'**on utilise des catalyseurs supplémentaires, choisis parmi des catalyseurs organométalliques ou des amines tertiaires.

22. Procédé pour la préparation de compositions de polyuréthanne selon au moins l'une des revendications précédentes, dans des appareils susceptibles d'être chauffés, à des températures inférieures à 130 °C.

23. Utilisation de la composition de polyuréthanne selon au moins l'une des revendications 1 à 22, pour la production de revêtements sur des supports en métal, matière plastique, verre, bois ou cuir.

24. Utilisation de la composition de polyuréthanne selon au moins l'une des revendications 1 à 22, pour la production de collages sur des supports en métal, matière plastique, verre, bois ou cuir ou d'autres supports résistants à la chaleur.

25. Compositions de revêtement pour métal, compositions de revêtement pour bois, compositions de revêtement pour verre, compositions de revêtement pour cuir et compositions de revêtement pour matières plastiques, qui contiennent une composition de polyuréthanne selon au moins l'une des revendications 1 à 22.
